# EUROPEAN PATENT SPECIFICATION

(11) **EP 1 560 662 B1**
(45) Date of publication and mention of the grant of the patent: **16.08.2006**
(21) Application number: 03768827.2
(22) Date of filing: 10.11.2003
(51) Int. Cl.: B05B 13/04, A01K 45/00, A61D 7/00, A61D 1/02

(54) **VACCINE SPRAY SYSTEM**
IMPFSTOFFSPRÜHSYSTEM
SYSTEME VACCINAL SOUS FORME DE JET

(30) Priority: 13.11.2002 US 425987 P; 24.01.2003 US 350557
(43) Date of publication of application: 10.08.2005
(73) Proprietor: Merial Limited, Duluth, GA 30096 (US)
(72) Inventor: JOHNSTON, Joseph, H., JR., Gainesville, GA 30507 (US)
(74) Representative: Harding, Charles Thomas
(86) International application number: PCT/US2003/035732
(87) International publication number: WO 2004/043612

(56) References cited:
- GB-A- 1 460 153
- US-A- 3 878 811
- US-A- 4 643 354

## Description

### FIELD OF THE INVENTION

The present invention is directed to an apparatus for spray delivering a fluid to a stationary open-topped container such that a substantial area of the container will receive the fluid spray. The present invention is further directed to a method of delivering a uniform fluid spray to a stationary open-topped container by ejecting a fan-shaped droplet spray from a moveable spray nozzle. See e.g. document GB-A-1 460 153.

### BACKGROUND OF THE INVENTION

Large populations of birds raised in enclosed environments for commercial purposes under crowded conditions are highly susceptible to the spread of infectious agents. Consequently, poultry typically are vaccinated to afford protection against a number of diseases, particularly of viral origin, that could otherwise decimate a flock. Optimum protection is most often afforded by vaccinating young birds or chicks.

While vaccines can be dispensed to individual birds or chicks by injection delivery, such a procedure is expensive, time-consuming and labor-intensive. Manual handling of the chicks can induce stress or injury from the needle, and may even initiate secondary infections from cross-contamination. Automatic inoculation devices that rapidly inject birds reduce the disadvantages of manual injection, but cannot eliminate individual handling each bird or chick. Such devices offer automatic charging of syringes and introduction of the injection needle into a bird held against the device, which then delivers the inoculum dose. Alternative methods to injection delivery that are less injurious to the birds have included the manual dispensation of liquid vaccines directly to the mouths, eyes or respiratory channels of chicks. However, these methods remain labor-intensive and costly.

Spray delivery of aerosolized vaccines allows the simultaneous treatment of large numbers of chicks without the disadvantage of manual handling of individual birds. The vaccine fluid is delivered to a flock of chicks by direct contact of the vaccine droplets with the eye, or the spray mist is inhaled to contact the respiratory tract. Spray delivery apparatus pass containers with chicks beneath a fixed spray nozzle using a conveyor belt or maximize spray coverage of the chicks by using multiple overhead spray nozzles, such as described in U.S. Patent Serial No. 4,316,464 to Peterson. Conveyor belt systems, however, are complex and costly and not readily transportable, requiring that the chick containers be brought to the site of vaccination.

Fixed spray jets are usually ejected from spray nozzles with a circular configuration that results in areas of a rectangular container receiving inadequate exposure to fluid, or spraying beyond the container resulting in significant wastage of expensive vaccine fluid. Spray jets may also be oval and provide a fan-shaped spray that may more completely cover the area of the chick container.

What is needed, therefore, is a spray delivery system that provides a uniform spraying of a container, with minimal vaccine wastage, but resulting in maximum exposure of the recipient chicks to the vaccine. What is further needed is a spray delivery system capable of delivering a fluid spray to a container of birds but does not require complex and costly container conveyor belt systems to pass the birds under the fluid spray.

### SUMMARY OF THE INVENTION

Briefly described, the present invention according to claim 1 provides a spray delivery system suitable for delivering a fluid spray to birds or chicks held within an open-topped container. The spray delivery system, therefore, comprises an elongated guide rail upon which at least one spray head may move reversibly. The elongated guide rail may be a pneumatically operated rodless cylinder with the spray head(s) attached thereto to allow reciprocal movement of the spray head(s) along the guide rail. A spray nozzle assembly on the spray head(s) may comprise a spray port and a fan-shaped nozzle for delivering a fan-shaped fluid spray. By reversibly moving the spray head along the guide rail, the spray delivery system may deliver an almost uniform fluid spray to an open-topped container, with minimal overspray and reduced wastage.

The elongated guide rail is mounted on a cover that has an elongated slot that permits the spray nozzle assembly to extend below the plane of the cover, while allowing the spray nozzle assembly to freely traverse the length of an open-topped container placed beneath the cover. The cover also has sidewalls, thereby forming a tunnel for receiving the open-topped container. The cover may be standing on a base, the bottom edges of the cover contacting the base, or the cover may be suspended over an area for receiving the container, with the sidewalls of the cover not contacting the base.

The present invention according to claim 18 further provides a method of delivering a fluid spray to an open-topped container of, for example, birds or chicks. The container with the chicks is positioned beneath the cover and approximately centralized relative to the elongated slot in the cover. A fan-shaped spray nozzle passes through the slot and may be height-adjusted to provide substantially total spray coverage of the width of the container with minimal overspray. The fluid, which may be, but is not limited to a vaccine, a medicament or a combination of both, is delivered to the spray nozzle assembly from a fluid container. A pump may pressurize the fluid. It is contemplated, however, that the fluid can be forced from a spray nozzle assembly by a pressurized gas applied to the fluid in the fluid container or the fluid may be sucked from the fluid container by a pressurized gas stream. The spray head, having the spray nozzle assembly thereon, can reversibly travel along the elongated guide rail by a switchable powered means such as a hydraulic or an electric motor having a toothed wheel, the toothed wheel engaging a toothed track on the elongated guide rail, or a belt-driven system. A preferred switchable power means is a reversible pneumatic means operably connected to activate a rodless cylinder to which the spray head(s) is operably attached. The movement of the spray head ensures substantially total spray coverage over the length, as well as the width, of the container.

Reciprocal passes of the spray head along the elongated guide rail may be repeated to achieve desired fluid doses. The spray of fluid, as a mist, will contact the eyes of the recipient chicks. It will also be possible, however, for the recipient birds to inhale the fluid droplets into the respiratory system, or ingest fluid by oral contact with fluid droplets that attach to feathers. Rubbing, shaking and physical contact between birds will also spread the fluid to most, if not all, treated birds. Once the desired coverage of the container has occurred, the pressurized fluid flow to the spray nozzle assembly may be arrested, the open-topped container removed from beneath the cover, replaced with a fresh container of chicks and the procedure repeated. Large numbers of birds or chicks, therefore, may be rapidly and uniformly contacted with a fluid with minimal handling of the birds.

Various objects, features, and advantages of the invention will become more apparent upon review of the detailed description set forth below when taken in conjunction with the accompanying drawing figures, which are briefly described as follows.

### BRIEF DESCRIPTION OF THE DRAWINGS

Fig. 1 illustrates a perspective view of a fluid spray apparatus according to the present invention.

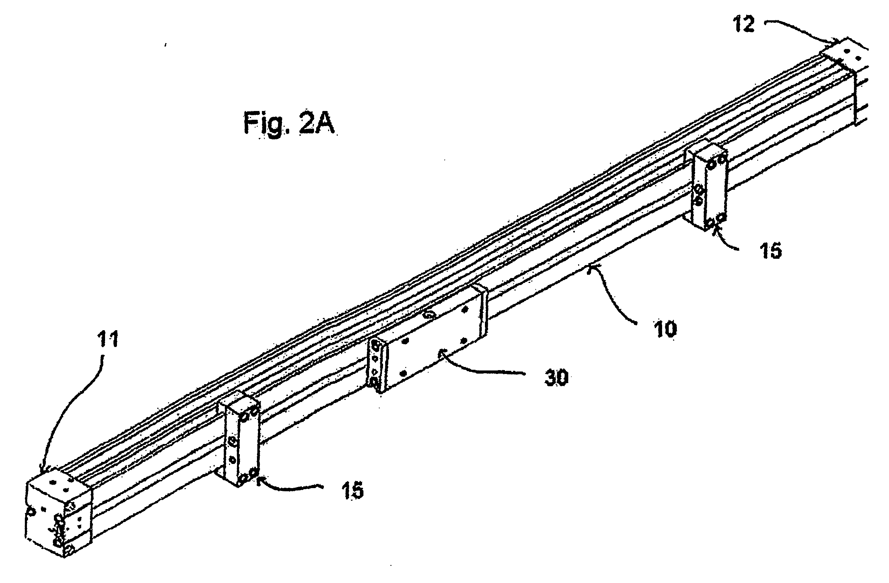

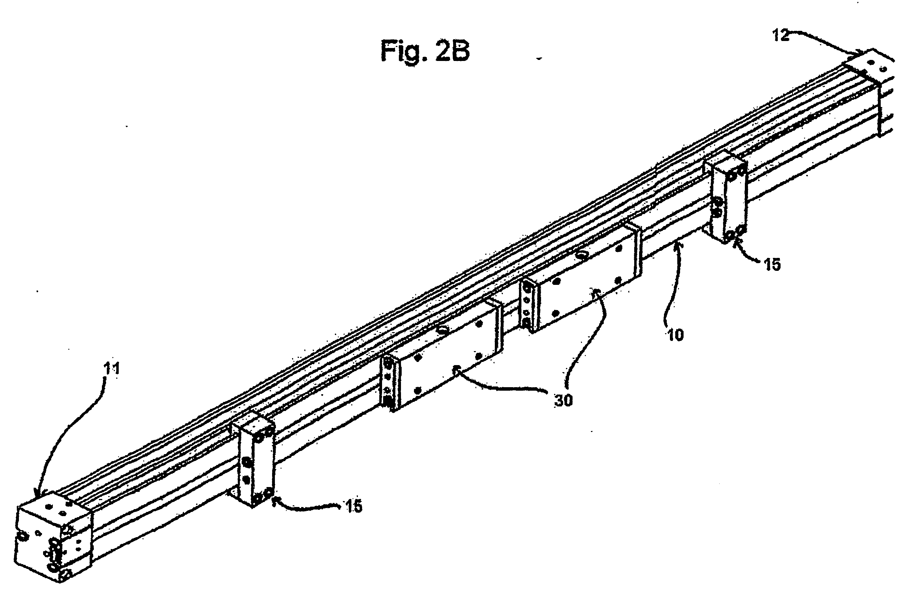

Fig. 2A illustrates a perspective view of an elongated guide rail having two end buffer stops, two adjustable buffer stops and a spray head thereon. Fig. 2B illustrates a perspective view of an embodiment of the present invention, wherein the elongated guide rail has two spray heads.
Figs. 3A-3D illustrate a U-bracket for mounting an elongated guide rail to a cover according to the present invention. Fig. 3A is a bottom view of the U-bracket; Fig. 3B is a perspective view of the U-bracket; Fig. 3C is a front view of the U-bracket; Fig. 3D is a side view of the U-bracket.
Figs. 4A-4D illustrate an L-bracket for mounting a spray nozzle assembly to a spray head according to the present invention. Fig. 4A shows a front view of the L-bracket; Fig. 4B shows a top view of the L-bracket; Fig. 4C shows a side view of the L-bracket; Fig. 4D shows a perspective view of the L-bracket.
Fig. 5 illustrates a perspective view of an embodiment of the spray delivery apparatus according to the present invention wherein the elongated guide rail is mounted directly to the cover.
Fig. 6 illustrates a partial view of a region of an elongated guide rail of the present invention wherein the spray head has an electrically powered motor having a toothed wheel, with the toothed wheel engaged with a toothed rail to allow movement of the spray head along the elongated guide rail.
Fig. 7 illustrates an elongated guide rail of the present invention wherein the spray head is attached to a powered belt for moving the spray head along the elongated guide rail.
Figs. 8A-8C illustrate embodiments of the spray nozzle assembly according to the present invention. Fig. 8A shows a spray nozzle assembly having an elongated spray port; Fig. 8B shows a spray nozzle assembly having an elongated spray port and a fan-shaped spray nozzle; Fig. 8C shows a spray nozzle assembly having a round spray port and a fan-shaped spray nozzle.

### DETAILED DESCRIPTION

A full and enabling disclosure of the present invention, including the best mode known to the inventor of carrying out the invention is set forth more particularly in the remainder of the specification, including reference to the accompanying drawings, wherein like reference numerals designate corresponding parts throughout several figures. This description is made for the purpose of illustrating the general principles of the invention and should not be taken in the limiting sense.

For convenience, certain terms employed in the specification, examples, and appended claims are collected here.

The term "bird" as used herein refers to males or females of any bird species. The present invention, therefore, may be practiced with any type of bird, including but is not limited to chicken, turkey, duck, goose, quail, pheasant, grouse or ratites. Ratites include flightless birds including ostrich, emu, cassowary and kiwi.

The term "vaccine" as used herein refers to an immunological composition given to an animal to elicit an immune response against an infectious agent The term vaccine is meant to emcompasse commonly use poultry vaccines including but not limited to infectious bronchitis vaccine, Mareck's disease vaccine, infection bursal disease vaccine, and the like.

The term "medicament" as used herein refers to any fluid used for medication and having a viscosity that allows a spray to be ejected from a spray nozzle assembly as a spray, including but not limited to a liquid that is aerosolized, vaporized, solubilized, and the like.

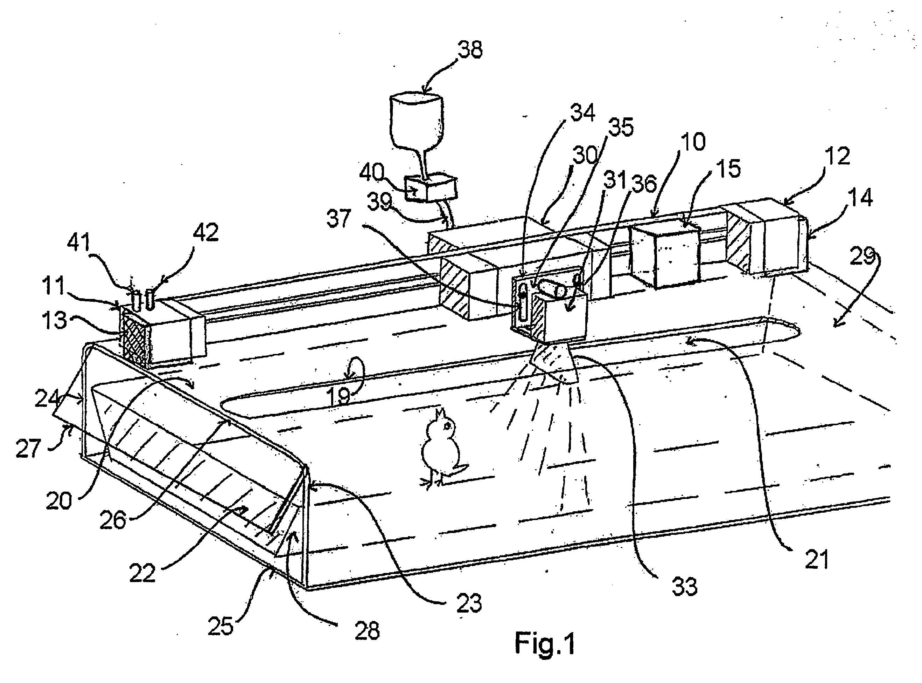

The present invention provides a spray delivery system suitable for delivering a fluid spray to objects in an open-topped container. This aspect of the present invention is particularly useful for delivering a fluid spray, such as a vaccine, or a medicament to small birds including chicks. With reference now to Fig. 1, the apparatus of the present invention for delivering a fluid spray to an open-topped container **22** generally includes an elongated guide **rail 10** having a first **11** and a second **12** buffer stop disposed at opposing ends of the elongated guide rail **10.** The first and second buffer stops **11** and **12** are attached to a top surface of a cover **20** having a horizontal top **26** with an elongated slot **21** therein, and descending sidewalls **23, 24** joined to outer edges of the horizontal top **26.** The descending sidewalls **23, 24** may stand on any substantially level surface, thereby defining with the horizontal top **26** a tunnel having an entrance **28** capable of receiving an open-topped container **22.** Optionally, the cover **20** may further comprise a base **25** attached to the lower edges of the descending sidewalls **23, 24.** It is contemplated, however, that the cover **20** having the elongated guide rail **10** thereon, may be suspended over an open-topped container **22,** with the sidewalls not contacting a base. The entrance **28** and an exit **29** of the tunnel may each be sealed with a hinged flap **27** or a curtain or the like attached to the cover **20,** and which can prevent escape of the birds that are to be sprayed, or to prevent escape of spray from the tunnel. The preferred open-topped container **22** is of standard design and usually to be filled with about 100 baby chicks. This contains the chicks in a crowded condition in which the chicks are in physical contact with one another.

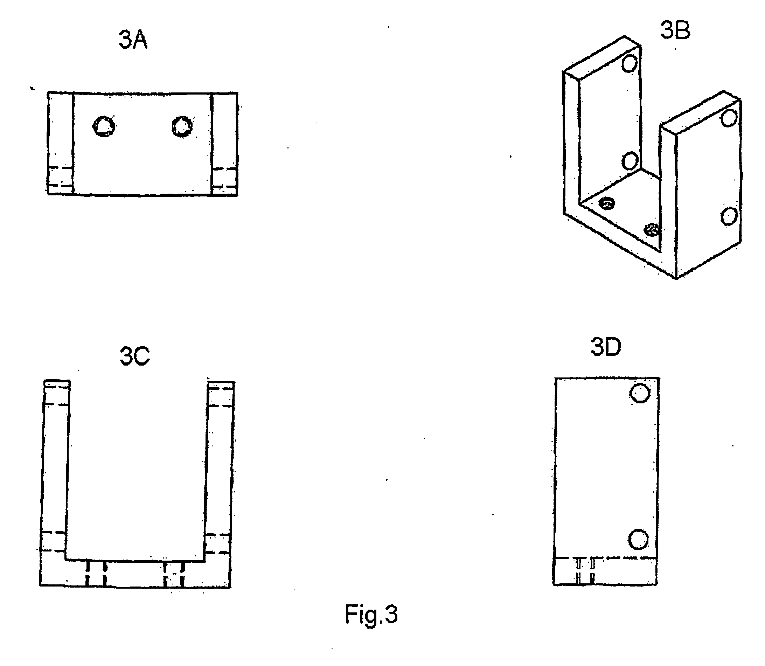

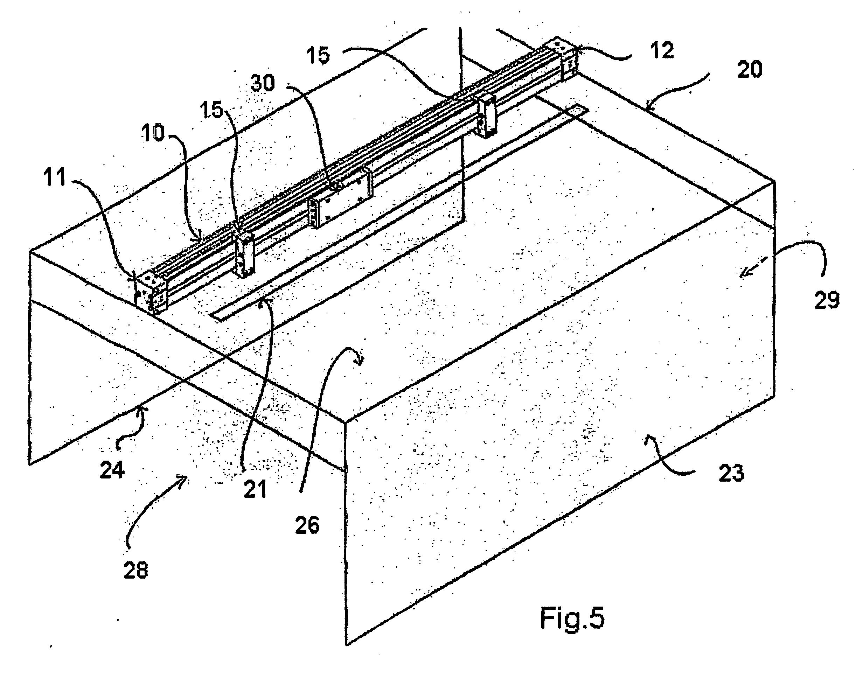

The first **11** and the second **12** buffer stops are positioned on the top surface **19** of the horizontal top **26** such that the elongated guide rail **10** is substantially parallel to the elongated slot **21** in the horizontal top **26.** It is contemplated for the first and second buffer stops **11** and **12** to be attached to the cover **20** by any means that will securely fasten the elongated guide **10** to the cover **22.** A preferred means of attachment is U-brackets **13** and **14.** One embodiment of a U-bracket **13, 14** suitable for securing an elongated guide rail **10** to a cover **20** according to the present invention, is illustrated in Figs. 3A-3D. However, in another embodiment, the elongated guide rail is attached to a cover without the use of U-brackets **13, 14,** as shown in Fig. 5.

The apparatus of the present invention further comprises at least one spray head **30** slideably disposed on the elongated guide rail **10** and capable of reversibly traveling from the first buffer stop **11** to the second buffer stop **12.** The spray head(s) **30** is operably connected to a switchable power means for reversibly moving the spray head **30.** It is contemplated that the spray delivery system of the present invention may comprise more than one spray head **30,** each spray head **30** being capable of moving in the same direction or in opposite directions from each other. Each spray head **30** may each have a switchable power means for moving the spray head **30.** The spray heads may also be linked, or the switchable power means are controlled, so that the spray heads **30** move in the same direction or in opposite directions.

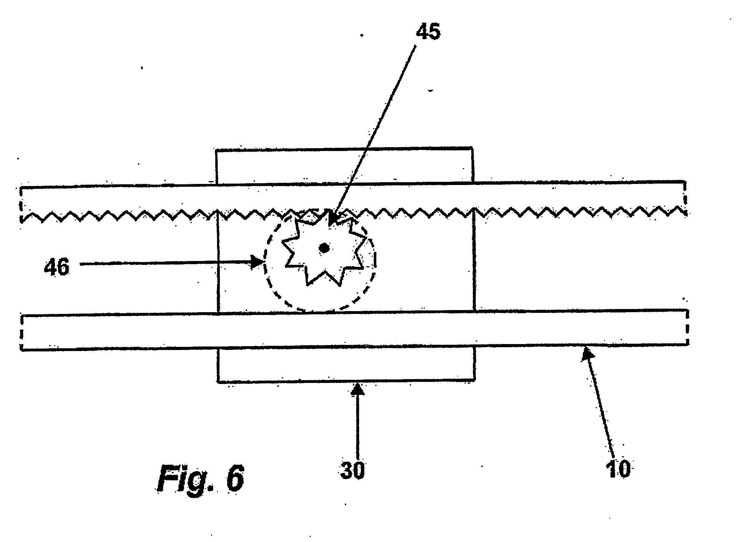

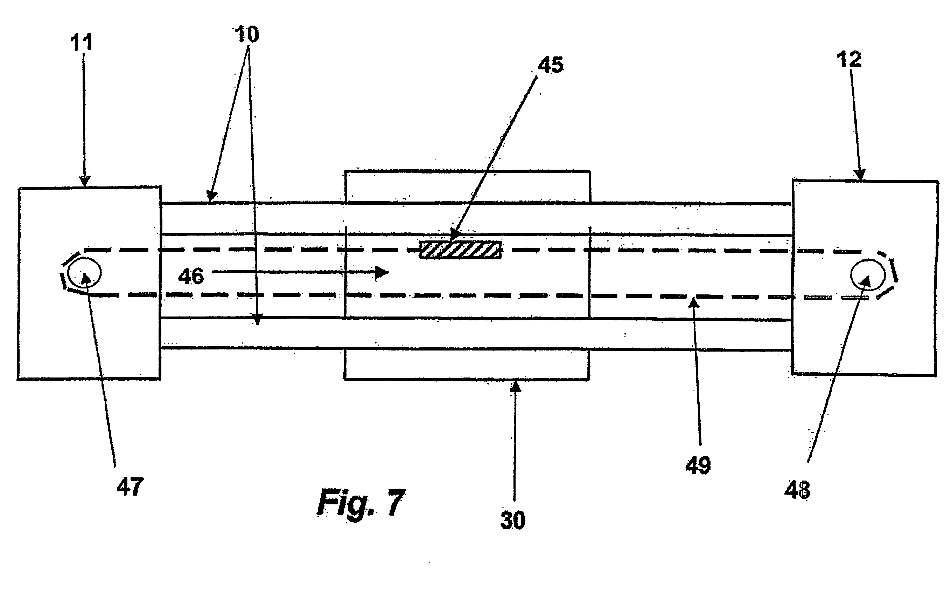

In one embodiment of the present invention, the first buffer **11** stop may further comprise a hydraulic fluid inlet port **41** and a fluid outlet port **42,** each operably connected to a hydraulic pump and an extendable means operably connected to the spray head **30.** The extendable means may, for example, be a piston capable of pushing or pulling the spray head **30** along the elongated guide rail **10.** In one embodiment, the spray head **30** is connected to a rodless cylinder that may be pneumatically operated by compressed air to move the spray head **30** along the elongated guide rail **10.** In another embodiment, the switchable power means is an electrically powered toothed wheel system comprising an electric motor **46** having a toothed wheel **45** attached to a rotor of the motor and engaging a toothed track **50** on the elongated guide rail **10** as shown in Fig. 6, an electrically powered belt driven system comprising an electric motor attached to the first buffer stop **11** and having a first pulley wheel **47** attached to the rotor thereof, a second pulley wheel **48** attached to the second buffer stop **12** and a belt **49** passing over the first **47** and second **48** pulley wheels, wherein the belt **49** is also attached to the spray head **30** as shown in Fig. 7.

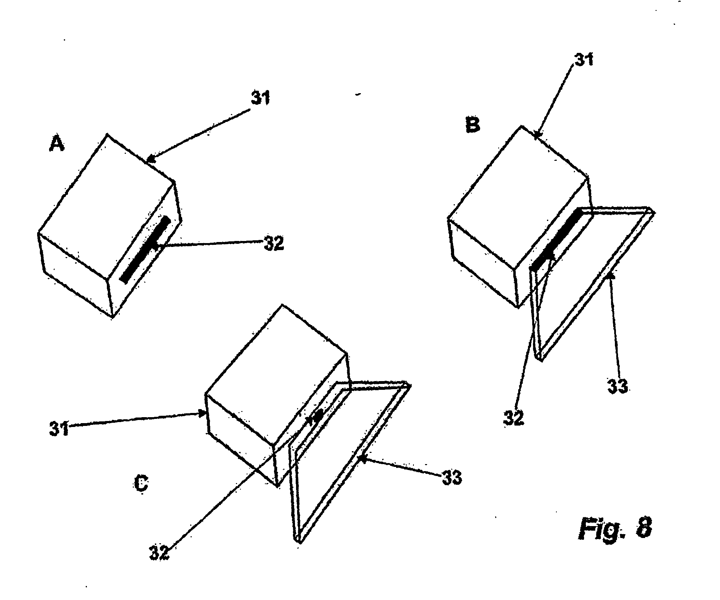

The spray head **30** further comprises a spray nozzle assembly **31** capable of receiving a pressurized fluid from a fluid container **38** and of ejecting a pressurized fluid to form a fan-shaped droplet (or mist) spray of fluid. The spray nozzle assembly **31** comprises a spray port **32** and optionally a fan-shaped spray nozzle **33.** The spray nozzle assembly **31** may eject a pressurized fluid through the spray port **32** capable of delivering a fan-shaped spray of sufficient width in a long-axis to spray fluid droplets over substantially all of the width of an open-topped container **22** placed in the tunnel beneath the spray nozzle assembly **31,** as shown in Fig. 1. In one embodiment, the spray port **32** may be elongated in the dimension of the width of the fan-shaped spray, as shown in Fig. 8B.

In another embodiment of the present invention, the fan-shape of the spray may be formed by ejection of the pressurized fluid from the spray port **32** that may be of any geometric shape, with the fan-shaped spray being formed by passage of the fluid spray stream through a substantially flattened fan-shaped spray nozzle **33,** as shown in Fig. 8C.

In yet another embodiment, the fan-shape of the spray may be formed by ejection of the pressurized fluid through a combination of an elongated spray port **32** and a substantially flattened fan-shaped spray nozzle **33,** as shown in Fig. 8B.

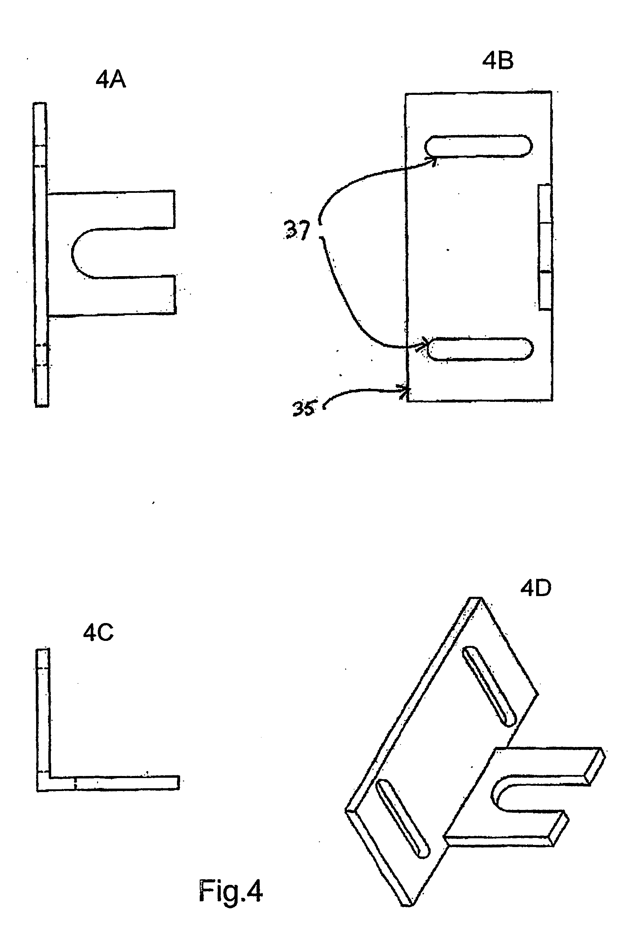

The spray nozzle assembly **31** may be directly attached to the spray head **30** by means of an adjustable L-bracket **34.** A suitable L-bracket **34** for use in the present invention, as illustrated in Figs. 4A-4D, comprises a back-plate **35** having at least one slot **37** capable of receiving a locking screw **36**. Release of the locking screw **36** loosens the spray nozzle assembly **31** relative to the spray head **30,** thereby allowing the height of the spray nozzle assembly **31** to be adjusted relative to an open-topped container **22** beneath, and thereby adjusting the width of the fluid spray delivered to the open-topped container **22.** The greater the height of the spray nozzle assembly **31,** the wider the spray contacting the open-topped container **22,** or the birds therein. This feature is particularly useful to prevent wastage of a valuable fluid such as a vaccine by reducing overspray of the container **22,** or from spraying more of the container **22** than is necessary, such as when the container **22** is not full. Once the spray nozzle assembly **31** is at the desired height, the screw(s) **36** may be tightened to maintain the spray nozzle assembly **31** in the selected position. Undesired spraying of the open topped container **22** may also be reduced by an adjustable buffer stop **15** that can restrict the travel of the spray head **30** along the elongated guide rail **10.**

As illustrated in Fig. 1, the spray nozzle assembly **31** is operably connected to at least one fluid container **38** by means of a delivery tube **39.** The fluid spray apparatus of the present invention further comprises a means of delivering a pressurized fluid from the fluid container **38** to the spray nozzle assembly **31.** Preferably, the means of delivery is a pump that is operably connected to the fluid container **38** and the spray nozzle assembly **31.** It is also contemplated for the fluid container **38** to be pressurized by a compressed gas, thereby forcing the fluid to the spray nozzle assembly **31** without using an interceding pump **40.** An exemplary means of applying a pressure to the fluid is described in U.S. Patent Serial No.: 4,316,464. It is further contemplated that the fluid can also be sucked from the fluid container **38** and then delivered to the spray port **32** by a compressed air stream generated from a compressor or air tank operably connected to the spray nozzle assembly **30.** The pressurized fluid will then be ejected from the spray nozzle assembly **31** through the spray port **32.**

In one embodiment of the present invention, the fluid container **38,** and optionally the pump **40,** is secured to the moveable spray head **30** and therefore moves with the spray head **30** along the elongated guide rail **10.**

In another embodiment of the present invention, the fluid container **38,** and optionally the pump **40,** is not rigidly attached to the spray head **30.** In this embodiment, the fluid container **38** and pump **40** are connected to the spray head **30** by a flexible delivery tube **39.** It is contemplated that in this embodiment, therefore, the fluid container **38** and pump **40** are attached to the cover **20** or other fixed portion of the spray apparatus.

One embodiment of the apparatus for delivering a fluid spray to an open-topped container of the present invention, therefore, comprises (a) an elongated guide rail **10** having a first **11** and a second **12** buffer stop disposed thereon, (b) a cover **20,** the cover **20** having a horizontal top **26** with a top surface **19** and two substantially parallel descending side-walls **23, 24,** the horizontal top **26** having an elongated slot **21** substantially parallel to the elongated guide rail **10,** and wherein each buffer stop **11,12** is attached to the cover **20,** (c) at least one spray head **30** slideably disposed on the elongated guide rail **10,** wherein the spray head **30** has mounted thereon a spray nozzle assembly **31** capable of delivering a fluid from a fluid container **38** as a fan-shaped fluid spray, (d) a means of delivering a fluid from a fluid container **38** to the spray nozzle assembly **31,** and (e) a switchable powered means for reversibly moving the spray head **30** along the elongated guide rail **10.**

In another embodiment of the present invention, the first and second buffer stops **11,12** are attached to the cover **20** by U-brackets **13,14.**

In one embodiment of the present invention, the apparatus further comprises a plurality of spray heads **30,** wherein the number of spray heads **30** is selected to provide spray coverage over the entire area of an open-topped container **22.**

In one embodiment of the present invention, the apparatus further comprises a fluid container **38** operably connected to a pump **40** and the spray nozzle assembly **31,** wherein the pump **40** can deliver a pressurized fluid from the fluid container **38** to the spray nozzle assembly **31,** and wherein the pressurized fluid is ejected from the spray nozzle assembly **31** as a fan-shaped spray.

In another embodiment of the present invention, the fluid container **38** is mounted on the cover.

In still another embodiment of the present invention, the pump **40** is mounted on the cover **20.**

In yet still another embodiment of the present invention, the fluid container **38** is mounted on the movable spray head **30.**

In one embodiment of the present invention, the fluid is delivered to the spray nozzle assembly **31** as a pressurized fluid by means of a compressed gas.

In one embodiment of the present invention, the pump **40** is mounted on the movable spray head **30.**

In another embodiment of the present invention, the spray nozzle assembly **31** has an elongated spray port **32** capable of delivering a fan-shaped fluid spray.

In yet another embodiment of the present invention, the spray nozzle assembly **31** has a fan-shaped spray nozzle **33.**

In one embodiment of the present invention, the elongated guide rail is a rodless cylinder with the moveable spray head **30** attached thereto.

In still another embodiment of the present invention, the switchable power means is a hydraulic pump.

In yet still another embodiment of the present invention, the switchable power means comprises an electric motor **46** having a toothed wheel **45,** the toothed wheel **45** engaging a toothed track **50** on the elongated guide rail **10.**

In another embodiment of the present invention, the spray nozzle assembly **31** is mounted on the spray head by an L-bracket **34,** the L-bracket **34** having at least one elongated slot **37** configured for adjusting the height of the spray nozzle assembly **31** over the open-topped container **22,** and wherein the L-bracket **34** is attached to the spray head **30** by a screw **36**.

In another embodiment of the present invention, the apparatus further comprises at least one adjustable buffer block **15.**

Another aspect of the present invention is a method for delivery of a fan-shaped fluid spray to an open-topped container **22.** While the method and apparatus of the present invention are suitable for spraying any fluid that has a viscosity that allows a spray to be ejected from a spray nozzle assembly as a spray such as a medicament, a vaccine or a mixture thereof, it is anticipated that the method of the present invention is particularly suitable for the spray delivery of a vaccine to recipient birds, such as chicks.

In the methods of the present invention, an open-topped container **22** holding, for example, a batch of chicks to be vaccinated, is provided. The open-topped container **22** is placed beneath the cover **20** and in the tunnel defined by the horizontal top **26** and the descending sidewalls **23, 24** of the cover **20**, and a surface beneath the sidewalls **23, 24.** The open-topped container **22** is preferably substantially below the elongated slot **21** of the cover **20**. The fluid to be spray delivered to the open-topped container **22** may be delivered under pressure to the spray nozzle assembly **31** by operating a pump **40** operably located between the fluid container **38** and the spray nozzle assembly **31.** Optionally, the fluid may be delivered by a compressed air stream that pulls the fluid from a fluid container **38,** and through the spray port **32,** or by top pressure applied to the fluid in the fluid container **38** and that can push the fluid out of the fluid container **38,** as described in U.S. Patent Serial No.: 4,316,464.

The spray head **30** may then be reversibly moved along the elongated guide rail **10** by operating a switchable power means. The number of reciprocal passages of the spray head **30** along the elongated slot **21** is selected to provide a desired degree of spray coverage of the recipient objects. Once the selected degree of spray coverage has been attained, the pressurized fluid flow to the spray nozzle assembly **31** is arrested.

When the spray cycle has been completed, it is desirable to remove the chick containers from the cabinet so that the next chick container can be inserted into the cabinet. The sprayed chick containers usually are stacked one atop the other and the side vent openings in the chick containers permit proper ventilation for the chicks.

After the spray cycle has been completed, the droplets of fluid will have been sprayed to the upper body portions of the chicks in each chick container. Some of the droplets will make direct contact with the eyes of the chicks, thus causing some of the chicks to be directly vaccinated. Other droplets will come to rest on the upper body portions of the chicks. The natural movements of the chicks in the chick container and the crowded conditions of the chicks in the container result in some of the droplets being rubbed from the upper body portions of the chicks into the eyes of adjacent chicks. Additionally, some of the chicks respond to the spray by shaking their heads and upper body portions. This causes some of the droplets to be splashed into the eye openings of adjacent chicks. When the fluid enters the eye opening of a chick, it tends to migrate through the nasal passages of the chick to be ingested by the chick. Also, some of the chicks tend to peck at droplets of fluid that are supported on the upper body portions of adjacent chicks. This results in some of the fluid being ingested orally by the chicks. It is desirable to retain the chicks in the chick containers for a period sufficient for the natural body motions and instincts of the chicks to disseminate the vaccine among the chicks in this manner.

One embodiment, therefore, of the method of the present invention for delivering a fan-shaped fluid spray to an open-topped container **22,** comprises the steps of providing an open-topped container **22** having therein objects desired to receive a fluid spray, positioning the open-topped container **22** below the cover **20** of the spray delivery apparatus according to the present invention, operating the means to deliver a fluid from the fluid container **38** to the spray nozzle assembly **31,** whereby the fluid is ejected from the spray nozzle assembly **31** as a fan-shaped spray directed towards the open-topped container **22,** and operating the switchable powered means, thereby reversibly moving the spray head **30** along the elongated guide rail **10** so that the fan-shaped spray is delivered substantially over the area of the open-topped container **22** and the objects therein.

In another embodiment of the method of the present invention, the step of reversibly moving the spray head **30** along the elongated guide rail **10** is repeated at least once.

In another embodiment of the method of the present invention, the objects in the open-topped container **22** are birds.

In another embodiment of the method of the present invention, the fluid ejected from the spray nozzle assembly **31** comprises a vaccine.

In yet another embodiment of the method of the present invention, the fluid ejected from the spray nozzle assembly **31** comprises a medicament

With respect to the above description, it is to be realized that the optimum dimensional relationships for the parts of the invention, to include variations in size, materials, shape, form, function and manner of operation, assembly, and use, are deemed readily apparent and obvious to one skilled in the art, and all equivalent relationships to those illustrated in the drawing and described in the specification are intended to be encompassed by the present invention. Further, the various components of the embodiments of the invention may be interchanged to produce further embodiments and these further embodiments are intended to be encompassed by the present invention.

Although the invention has been described in detail for the purpose of illustration, it is understood that such detail is solely for that purpose, and variations can be made therein by those skilled in the art without departing from the spirit and scope of the invention which is defined by the following claims.

## Claims

1. An apparatus for delivering a fluid spray to an open-topped container, comprising:
(a) an elongated guide rail having a first and a second buffer stop disposed thereon;
(b) a cover, the cover having a horizontal top with a top surface and two substantially parallel descending side-walls, the horizontal top having an elongated slot substantially parallel to the elongated guide rail, and wherein each buffer stop is attached to a top surface of the cover;
(c) a spray head slideably disposed on the elongated guide rail, wherein the spray head has mounted thereon a spray nozzle assembly capable of delivering a fluid from a fluid container as a fan-shaped fluid spray;
(d) a means of delivering a fluid from a fluid container to the spray nozzle assembly; and,
(e) a switchable powered means for reversibly moving the spray head along the elongated guide rail.

2. The apparatus according to Claim 1, wherein the first and second buffer stops are mounted to the cover by U-brackets.

3. The apparatus according to Claim 1, further comprising a plurality of spray heads.

4. The apparatus according to Claim 1 further comprising a fluid container operably connected to a pump and the spray nozzle assembly, wherein the pump can deliver a fluid from the fluid container to the spray nozzle assembly, and wherein the fluid is ejected from the spray nozzle assembly as a fan-shaped spray.

5. The apparatus according to Claim 4, wherein the fluid container is mounted on the cover.

6. The apparatus according to Claim 4, wherein the pump is mounted on the cover.

7. The apparatus according to Claim 4, wherein the fluid container is mounted on the movable spray head.

8. The apparatus according to Claim 4, wherein the pump is mounted on the movable spray head.

9. The apparatus according to Claim 1, wherein the spray nozzle assembly has an elongated spray port capable of delivering a fan-shaped fluid spray.

10. The apparatus according to Claim 1, wherein the spray nozzle assembly has a fan-shaped spray nozzle.

11. The apparatus according to Claim 1, wherein the switchable power means is a hydraulic pump.

12. The apparatus according to Claim 1, wherein the switchable power means comprises an electric motor having a toothed wheel, the toothed wheel engaging a toothed track on the elongated guide rail.

13. The apparatus according to Claim 1, wherein the switchable power means comprises a pneumatically operated rodless cylinder.

14. The apparatus according to Claim 1, wherein the switchable power means comprises a belt attached to the spray head, wherein the belt is operably held by at least two pulleys, and wherein a pulley is operably attached to an electric motor and each pulley is rotatably attached to a buffer stop.

15. The apparatus according to Claim 1, wherein the spray nozzle assembly is mounted on the spray head by an L-bracket, the L-bracket having at least one slot configured for adjusting the height of the spray nozzle assembly over the open-topped container, and wherein the L-bracket is secured to the spray head by a screw.

16. The apparatus according to Claim 1, further comprising at least one adjustable buffer block.

17. The apparatus according to Claim 1, wherein the cover is suspended.

18. A method of delivering a fan-shaped fluid spray to an open-topped container, comprising the steps of:
(a) providing an open-topped container having therein objects desired to receive a fluid spray
(b) positioning the open-topped container in a tunnel defined by the cover of the apparatus according to Claim 1;
(c) operating a pump, thereby delivering from the fluid container a fluid under pressure to the spray nozzle assembly, whereby the fluid is ejected from the spray nozzle assembly as a fan-shaped spray directed towards the open-topped container; and
(d) operating the switchable powered means, thereby reversibly moving the spray head along the elongated guide rail so that the fan-shaped spray is delivered substantially over the area of the open-topped container and the objects therein.

19. The method according to Claim 15, wherein step (d) is repeated at least once.

20. The method according to Claim 15, wherein the objects in the open-topped container are birds.

21. The method according to Claim 15, wherein the fluid ejected from the spray nozzle assembly comprises a vaccine, a medicament or a mixture thereof.

22. The method according to Claim 15, wherein the fluid ejected from the spray nozzle assembly is a vaccine.

## Patentansprüche

1. Vorrichtung zum Abgeben eines Fluidsprühnebels zu einem oben offenen Behälter mit:
(a) einer länglichen Führungsschiene mit einem ersten und einem zweiten Prellbock, die daran angeordnet sind;
(b) einer Abdeckung, wobei die Abdeckung eine waagerechte Oberseite mit einer Oberfläche und zwei im wesentlichen parallelen abhängenden Seitenwänden hat, die waagerechte Oberseite einen länglichen Schlitz hat, der im wesentlichen parallel zur länglichen Führungsschiene ist, und wobei jeder Prellbock an einer Oberfläche der Abdeckung befestigt ist;
(c) einem Sprühkopf, der auf der länglichen Führungsschiene gleitfähig angeordnet ist, wobei am Sprühkopf eine Sprühdüsenanordnung angeordnet ist, die ein Fluid aus einem Fluidbehälter als fächerförmigen Fluidsprühnebel abgeben kann;
(d) einer Einrichtung zum Abgeben eines Fluids aus einem Fluidbehälter zur Sprühdüsenanordnung; und
(e) einer umschaltbaren Antriebseinrichtung zum reversierbaren Bewegen des Sprühkopfs entlang der länglichen Führungsschiene.

2. Vorrichtung nach Anspruch 1, wobei der erste und zweite Prellbock an der Abdeckung durch U-Halterungen angeordnet sind.

3. Vorrichtung nach Anspruch 1, ferner mit mehreren Sprühköpfen.

4. Vorrichtung nach Anspruch 1, ferner mit einem Fluidbehälter, der mit einer Pumpe und der Sprühdüsenanordnung betrieblich verbunden ist, wobei die Pumpe ein Fluid aus dem Fluidbehälter zur Sprühdüsenanordnung abgeben kann und wobei das Fluid aus der Sprühdüsenanordnung als fächerförmiger Sprühnebel ausgestoßen wird.

5. Vorrichtung nach Anspruch 4, wobei der Fluidbehälter auf der Abdeckung angeordnet ist.

6. Vorrichtung nach Anspruch 4, wobei die Pumpe auf der Abdeckung angeordnet ist.

7. Vorrichtung nach Anspruch 4, wobei der Fluidbehälter auf dem beweglichen Sprühkopf angeordnet ist.

8. Vorrichtung nach Anspruch 4, wobei die Pumpe auf dem beweglichen Sprühkopf angeordnet ist.

9. Vorrichtung nach Anspruch 1, wobei die Sprühdüsenanordnung eine längliche Sprühöffnung hat, die einen fächerförmigen Sprühnebel abgeben kann.

10. Vorrichtung nach Anspruch 1, wobei die Sprühdüsenanordnung eine fächerförmige Sprühdüse hat.

11. Vorrichtung nach Anspruch 1, wobei die umschaltbare Antriebseinrichtung eine hydraulische Pumpe ist.

12. Vorrichtung nach Anspruch 1, wobei die umschaltbare Antriebseinrichtung einen Elektromotor mit einem Zahnrad aufweist, wobei das Zahnrad in eine Zahnstange auf der länglichen Führungsschiene eingreift.

13. Vorrichtung nach Anspruch 1, wobei die umschaltbare Antriebseinrichtung einen pneumatisch betriebenen stangenlosen Zylinder aufweist.

14. Vorrichtung nach Anspruch 1, wobei die umschaltbare Antriebseinrichtung einen am Sprühkopf angebrachten Riemen aufweist, wobei der Riemen durch mindestens zwei Riemenscheiben betrieblich gehalten wird und wobei eine Riemenscheibe an einem Elektromotor betrieblich angebracht ist und jede Riemenscheibe an einem Prellbock drehbar angebracht ist.

15. Vorrichtung nach Anspruch 1, wobei die Sprühdüsenanordnung am Sprühkopf durch eine L-Halterung angeordnet ist, wobei die L-Halterung mindestens einen Schlitz hat, der zum Einstellen der Höhe der Sprühdüsenanordnung über dem oben offenen Behälter konfiguriert ist, und wobei die L-Halterung am Sprühkopf durch eine Schraube befestigt ist.

16. Vorrichtung nach Anspruch 1, ferner mit mindestens einem einstellbaren Prellblock.

17. Vorrichtung nach Anspruch 1, wobei die Abdeckung aufgehängt ist.

18. Verfahren zum Abgeben eines fächerförmigen Fluidsprühnebels zu einem oben offenen Behälter mit den folgenden Schritten:
(a) Bereitstellen eines oben offenen Behälters mit Objekten darin, die einen Fluidsprühnebel erhalten sollen;
(b) Positionieren des oben offenen Behälters in einem Tunnel, der durch die Abdeckung der Vorrichtung nach Anspruch 1 gebildet ist;
(c) Betreiben einer Pumpe und **dadurch** erfolgendes Abgeben eines Fluids aus dem Fluidbehälter unter Druck zur Sprühdüsenanordnung, wodurch das Fluid aus der Sprühdüsenanordnung als fächerförmiger Sprühnebel ausgestoßen wird, der zum oben offenen Behälter gerichtet ist; und
(d) Betreiben der umschaltbaren Antriebseinrichtung und **dadurch** erfolgendes reversibles Bewegen des Sprühkopfs entlang der länglichen Führungsschiene, so daß der fächerförmige Sprühnebel im wesentlichen über die Fläche des oben offenen Behälters und die Objekte darin abgegeben wird.

19. Verfahren nach Anspruch 15, wobei der Schritt (d) mindestens einmal wiederholt wird.

20. Verfahren nach Anspruch 15, wobei die Objekte im oben offenen Behälter Vögel sind.

21. Verfahren nach Anspruch 15, wobei das aus der Sprühdüsenanordnung ausgestoßene Fluid einen Impfstoff, ein Medikament oder eine Mischung daraus aufweist.

22. Verfahren nach Anspruch 15, wobei das aus der Sprühdüsenanordnung ausgestoßene Fluid ein Impfstoff ist.

## Revendications

1. Appareil pour délivrer un jet de fluide vers un conteneur ouvert sur le dessus, comprenant :
(a) un rail de guidage allongé comportant un premier et un second butoir disposés dessus ;
(b) un couvercle, le couvercle ayant une partie supérieure horizontale avec une surface supérieure et deux parois latérales descendantes sensiblement parallèles, la partie supérieure horizontale comportant une fente allongée sensiblement parallèle au rail de guidage allongé, et dans lequel chaque butoir est fixé à une surface supérieure du couvercle ;
(c) une tête de pulvérisation placée de manière coulissante sur le rail de guidage allongé, dans lequel un ensemble de buse d'injection capable de délivrer un fluide à partir d'un conteneur de fluide sous forme d'un jet de fluide en éventail est monté sur la tête de pulvérisation ;
(d) un moyen pour délivrer un fluide à partir d'un conteneur de fluide à l'ensemble de buse d'injection ; et
(e) un moyen d'actionnement commutable pour déplacer la tête de pulvérisation en marche arrière le long du rail de guidage allongé.

2. Appareil selon la revendication 1, dans lequel le premier et le second butoir sont montés sur le couvercle à l'aide de pattes en forme de U.

3. Appareil selon la revendication 1, comprenant, en outre, une pluralité de têtes de pulvérisation.

4. Appareil selon la revendication 1, comprenant, en outre, un conteneur de fluide raccordé fonctionnellement à une pompe et à l'ensemble de buse de pulvérisation, dans lequel la pompe peut délivrer un fluide à l'ensemble de buse de pulvérisation à partir du conteneur de fluide et dans lequel le fluide est éjecté à partir de l'ensemble de buse de pulvérisation sous forme d'un jet de fluide en éventail.

5. Appareil selon la revendication 4, dans lequel le conteneur de fluide est monté sur le couvercle.

6. Appareil selon la revendication 4, dans lequel la pompe est montée sur le couvercle.

7. Appareil selon la revendication 4, dans lequel le conteneur de fluide est monté sur la tête de pulvérisation mobile.

8. Appareil selon la revendication 4, dans lequel la pompe est montée sur la tête de pulvérisation mobile.

9. Appareil selon la revendication 1, dans lequel l'ensemble de buse de pulvérisation comporte un orifice de pulvérisation allongé capable de délivrer un jet de fluide en forme d'éventail.

10. Appareil selon la revendication 1, dans lequel l'ensemble de buse de pulvérisation comporte une buse de pulvérisation en forme d'éventail.

11. Appareil selon la revendication 1, dans lequel le moyen d'actionnement commutable est une pompe hydraulique.

12. Appareil selon la revendication 1, dans lequel le moyen d'actionnement commutable comprend un moteur électrique comportant une roue dentée, la roue dentée s'engrenant dans un chemin denté sur le rail de guidage allongé.

13. Appareil selon la revendication 1, dans lequel le moyen d'actionnement commutable comprend un cylindre sans tige à commande pneumatique.

14. Appareil selon la revendication 1, dans lequel le moyen d'actionnement commutable comprend une courroie fixée à la tête de pulvérisation, dans lequel la courroie est retenue fonctionnellement par au moins deux poulies et dans lequel une poulie est fixée fonctionnellement à une moteur électrique et chaque poulie est attachée en rotation à un butoir.

15. Appareil selon la revendication 1, dans lequel l'ensemble de buse de pulvérisation est monté sur la tête de pulvérisation à l'aide d'une patte en forme de L, la patte en forme de L comportant au moins une fente configurée pour ajuster la hauteur de l'ensemble de buse de pulvérisation sur le conteneur ouvert sur le dessus et dans lequel la patte en forme de L est fixée à la tête de pulvérisation par une vis.

16. Appareil selon la revendication 1, comprenant, en outre, au moins un butoir ajustable.

17. Appareil selon la revendication 1, dans lequel le couvercle est suspendu.

18. Procédé pour délivrer un fluide en forme d'éventail à un conteneur ouvert sur le dessus, comprenant les étapes consistant à :
(a) prévoir un conteneur ouvert sur le dessus dans lequel se trouvent des objets destinés à recevoir un jet de fluide ;
(b) positionner le conteneur ouvert sur le dessus dans un tunnel défini par le couvercle de l'appareil selon la revendication 1 ;
(c) actionner une pompe pour délivrer ainsi un fluide sous pression à l'ensemble de buse de pulvérisation à partir du conteneur de fluide, le fluide étant éjecté de l'ensemble de buse de pulvérisation sous forme d'un jet en éventail vers le conteneur ouvert sur le dessus ; et
(d) actionner le moyen d'actionnement commutable pour déplacer de manière réversible la tête de pulvérisation le long du rail de guidage allongé de sorte que le jet en forme d'éventail est délivré sensiblement sur la région du conteneur ouvert sur le dessus et sur les objets placés dedans.

19. Procédé selon la revendication 15, dans lequel l'étape (d) est répétée au moins une fois.

20. Procédé selon la revendication 15, dans lequel les objets placés dans le conteneur ouvert sur le dessus, sont des oiseaux.

21. Procédé selon la revendication 15, dans lequel le fluide éjecté par l'ensemble de buse de pulvérisation comprend un vaccin, un médicament ou un mélange de ceux-ci.

22. Procédé selon la revendication 15, dans lequel le fluide éjecté par l'ensemble de buse de pulvérisation est un vaccin.
